## Europäisches Patentamt
## European Patent Office
## Office européen des brevets

(11) Veröffentlichungsnummer: **0 116 660**
**B1**

(12) # EUROPÄISCHE PATENTSCHRIFT

(45) Veröffentlichungstag der Patentschrift:
24.09.86

(51) Int. Cl.⁴: **A 01 D 43/10**

(21) Anmeldenummer: 83101548.2

(22) Anmeldetag: 18.02.83

(54) Landmaschine mit einem Mähwerk und einer Konditioniereinrichtung.

(43) Veröffentlichungstag der Anmeldung:
29.08.84 Patentblatt 84/35

(45) Bekanntmachung des Hinweises auf die Patenterteilung:
24.09.86 Patentblatt 86/39

(84) Benannte Vertragsstaaten:
AT BE CH DE FR GB IT LI NL

(56) Entgegenhaltungen:
DE-A-2 712 645
FR-A-2 328 386
GB-A-2 068 684
US-A-4 061 946

(73) Patentinhaber: Klöckner- Humboldt- Deutz AG
Zweigniederlassung Fahr, D-7702 Gottmadingen
(DE)

(72) Erfinder: Ruprecht, Hermann, Joh.- Seb.- Bach-
Strasse 14, D-7700 Singen/Htwl. (DE)
Erfinder: Schulze- Selting, Bruno,
Hohenkrähenstrasse 15, D-7700 Singen/Htwl (DE)

LIBER, STOCKHOLM 1986

## Beschreibung

Die Erfindung bezieht sich auf eine fahrbare, von einem Schlepper oder dergl. gezogene Landmaschine mit den Merkmalen nach dem Oberbegriff des geltenden Patentanspruchs 1.

Mit einer Landmaschine der in Rede stehenden Gattung wird landwirtschaftliches Halmgut gemäht und im gleichen Arbeitsgang aufbereitet, um so die Trocknungszeiten für das Erntegut zu verringern.

Die deutschen Offenlegungsschriften 28 14 399, 27 50 094 und 21 51 156 zeigen Landmaschinen, bei denen den Mähwerken Konditioniereinrichtungen in Form von Quetschwalzenpaaren nachgeschaltet sind. Ebenfalls ist dem Prospekt der Firma Kuhn "Faucheuse-Conditioneuse SC 300" (Impressum: 35 80 F 282) eine derartige Landmaschine zu entnehmen.

Die bekannten Landmaschinen, bei denen das Mähwerk und die Konditioniereinrichtung auf Laufrädern verfahrbar sind, weisen den Nachteil auf, daß das Mähwerk und die Konditioniereinrichtung zu einer baueinheit zusammengefaßt sind. Falls mit diesen Maschinen lediglich gemäht werden sollte, müßte die Konditioniereinrichtung von der Maschine entfernt werden.

Der vorliegenden Erfindung liegt die Aufgabe zugrunde, eine fahrbare Landmaschine der eingangs genannten Art zu schaffen, bei der die Konditioniereinrichtung über die ohnehin an der Landmaschine vorhandene Hubvorrichtung in eine Außerbetriebstellung gebracht und dort verriegelt werden kann, sodaß die Maschine lediglich zum Mähen Verwendung finden kann.

Die Erfindung löst die gestellte Aufgabe mit Hilfe der im kennzeichnenden Teil des Hauptanspruchs angegebenen Maßnahmen. Durch die vom Mähwerk unabhängige Aufhängung der Konditioniereinrichtung am Hauptrahmen wird eine wesentliche Voraussetzung dafür geschaffen, daß das Mähwerk unabhängig von dieser Konditioniereinrichtung eingesetzt werden kann. Die Anordnung zur Überführung der Konditioniereinrichtung und deren Verriegelung in einer Außerbetriebstellung zeichnet sich insbesondere durch ihre einfache, kostengünstige Bauweise aus.

Weitere vorteilhafte Ausgestaltungen sind den Unteransprüchen 2 und 3 zu entnehmen.

Weitere, für die Erfindung wesentliche Merkmale sowie die daraus resultierenden Vorteile sind der nachfolgenden Beschreibung anhand eines Ausführungsbeispiels der Erfindung zu entnehmen.

Es zeigen:

Fig. 1 eine gezogene Landmaschine mit einem Mähwerk und einer Konditioniereinrichtung in schematischer Draufsicht;

Fig. 2 die Landmaschine nach Fig. 1 im schematischer Rückansicht;

Fig. 3 Einzelheiten der Landmaschine nach Fig. 1 in teilweise geschnittener Draufsicht;

Fig. 4 die Anordnung nach Fig. 3 in Rückansicht ohne die Konditioniereinrichtung;

Fig. 5 eine Seitenansicht der Landmaschine nach Fig. 3;

Fig. 6 einen Schnitt entlang der Linie VI-VI in Fig. 1;

Fig. 7 die Landmaschine mit Mähwerk und Konditioniereinrichtung in ausgehobener Transportstellung;

Fig. 8 die Landmaschine nach Fig. 7 mit Mitteln zum Verriegeln der Konditioniereinrichtung in der der Transportstellung entsprechenden Lage und

Fig. 9 die Landmaschine mit dem in Arbeitsstellung befindlichen Mähwerk und angebauter, jedoch unwirksamer Konditioniereinrichtung.

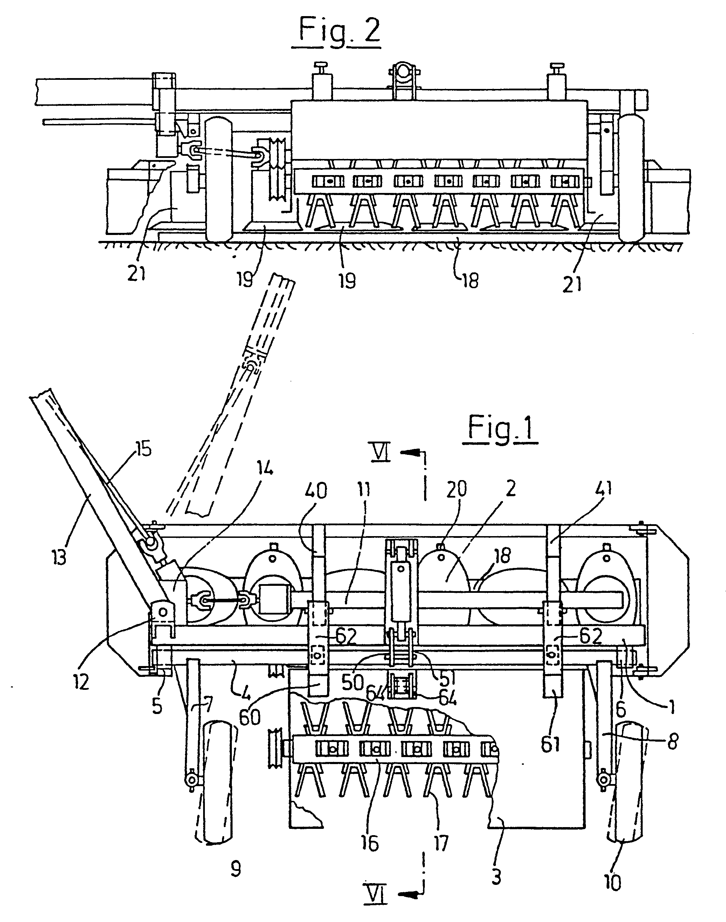

Die Fig. 1 - 5 zeigen den grundsätzlichen Aufbau einer Landmaschine mit einem Mähwerk und einer Konditioniereinrichtung.

Die in Fig. 1 in schematischer Draufsicht wiedergegebene Landmaschine verfügt über einen Hauptrahmen 1, dem,bezogen auf die Fahrtrichtung, ein Mähwerk 2 in noch näher zu beschreibender Weise vorgelagert und eine Konditioniereinrichtung 3 in ebenfalls noch näher zu beschreibender Weise nachgeschaltet ist.

Parallel zum Hauptrahmen 1 erstreckt sich ein Hilfsrahmen 4. Der Hilfsrahmen 4 ist in Lagern 5 und 6 des Hauptrahmens 1 schwenkbeweglich gehaltert. Am Hilfsrahmen 4 sind im der Nähe der Lager 5 und 6 Ausleger 7 und 8 befestigt. Die Ausleger 7 und 8 tragen an ihren freien, nach unten weisenden Enden Laufräder 9 und 10, über die sich die Landmaschine auf der Bodenoberfläche abstützt.

Analog zum Hilfsrahmen 4 ist ein Mähwerksrahmen 11 des Mähwerks 2 relativbeweglich zum Hauptrahmen 1 an letzterem angelenkt.

Am in der Zeichnung links liegenden Ende des Hauptrahmens 1 ist ein zusätzliches Lager 12 vorgesehen, das eine teilweise dargestellte Zugvorrichtung 13 schwenk- und feststellbar aufnimmt. Die Zugvorrichtung 13 ist mit einem selbst nicht dargestellten Schlepper oder dgl. verbunden. Die Zugvorrichtung 13 kann aus der dargestellten Lage, die der Arbeitsstellung, in der die Landmaschine seitlich vom Schlepper arbeitet, entspricht, in eine in der Zeichnung gestrichelt wiedergegebene Position verschwenkt werden. Diese Endlage gibt die Transportstellung wieder, in der die Landmaschine etwa mittig zum Schlepper läuft.

Am in der Zeichnung links liegenden Ende des Hauptrahmens 1 ist ferner ein Getriebe 14 angeflanscht. Das Getriebe 14 steht über eine Antriebswelle 15, die als Gelenkwelle ausgebildet ist, mit dem selbst nicht dargestellten motorischen Antrieb des Schleppers in Antriebsverbindung. Vom Getriebe 14 ausgehend erfolgt der Antrieb des Mähwerks 2 und der Konditioniereinrichtung 3.

Im dargestellten Ausführungsbeispiel besteht die Konditioniereinrichtung 3 aus einer Rotorwelle 16, die mit einer Vielzahl von etwa V-förmig gespreizten Mitnehmern 17 bestückt ist. Die umlaufenden Mitnehmer 17 erfassen das vom Mähwerk 2 geschnittene und in Schwaden auf der Bodenoberfläche abgelegte Erntegut, wobei es unter gleichzeitiger Aufbereitung (Konditionierung) "über Kopf" gefördert und erneut auf der Bodenoberfläche abgelegt wird. Aufbau und Wirkungsweise einer derartigen Konditioniereinrichtung sind grundsätzlich bekannt. Anstelle der mit den vorgeschlagenen Mitnehmern bestückten Rotorwelle kann auch eine andere Bauart (z. B. ein Bürstenrotor) Verwendung finden.

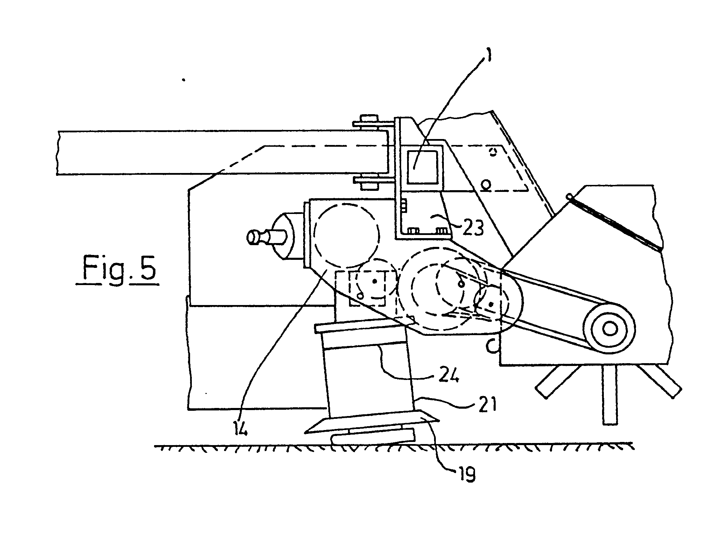

Die Mähwerkskonstruktion geht insbesondere aus den Fig. 1 und 4 hervor. Bei dem Mähwerk 2 handelt es sich um eine kombinierte Bauweise eines Trommel- und Scheibenmähwerks. Das Mähwerk 2 stütztsish in seiner Arbeitsstellung über einen Mähbalken 18, der sich über etwa die gesamte Mähbreite erstreckt, auf der Bodenoberfläche ab. Der Mähbalken 18 verfügt über Lager- und Antriebselemente für mehrere (im dargestellten Ausführungsbeispiel sechs) Mähscheiben 19. Die Mähscheiben 19 rotieren in einer Ebene unmittelbar oberhalb des Mähbalkens 18. Sie haben eine ovale Form und sind mit Schneidmessern 20 bestückt. Zum besseren Abtransport des geschnittenen Gutes zur Mitte hin sind auf die jeweils außen liegenden Mähscheiben Trommeln 21 aufgesetzt.

Bedarfsweise können auch die jeweils nächst innen liegenden Mähscheiben 19 mit Tronmeln 21 bestückt werden. In diesem Zusamnenhang sei auf ein konstruktiv wesentliches Merkmal des beschriebenen Mähwerks 2 hingewiesen. Wie insbesondere aus Fig. 4 ersichtlich, sind drei der vorhandenen Mähscheiben 19 mit Trommeln 21 bestückt. Es handelt sich hierbei - gesehen von links nach rechts bezogen auf die Zeichnung - um die ersten beiden Mähscheiben 19 sowie um die rechts liegende, Äußere Mähscheibe 19.

Während sich der Mähbalken 18 über die gesamte Mähwerksbreite erstreckt, verbindet der Mähwerksrahmen 11 lediglich die - bezogen auf die Darstellung nach Fig. 4 - die linke, zweite Trommel 21 mit der Äußeren, rechts liegenden Trommel 21. Dies bedeutet mit anderen Worten, daß der Mähwerksrahmen 11 um etwa die der Arbeitsbreite der ersten Mähscheibe 19 entsprechende Distanz kürzer gehalten ist als der Mähbalken 18. Auf diese Weise wird über der ersten Trommel 21 ein mit dem Pfeil 22 angedeuteter Freiraum geschaffen, in den das Getriebe 14, welches am Hauptrahmen 1 angeflanscht ist, hineinragen kann. Um den Freiraum 22 noch zu vergrößern, ist die Bauhöhe der in Fig. 4 links liegenden, ersten Trommel 21 niedriger gehalten (Oberkante 24), als die der übrigen Trommeln 21. Dies bedeutet aber, daß die verfügbare Arbeitsbreite der maximal zulässigen Transportbreite voll entsprechen kann, weil sämtliche Baugruppen der Landmaschine innerhalb der Mähwerksbreite untergebracht sind. Im übrigen bildet der Mähwerksrahmen 11 zusammen mit der zweiten Trommel 21 und der rechts außen liegenden Trommel 21 sowie dem Mähbalken 18 einen in sich geschlossenen, stabilen, etwa rechteckigen Rahmen. Trotz leichter, kompakter Bauweise bei geringer bauhöhe zeichnet sich das Mähwerk 2 durch eine große Arbeitsbreite, geringem baulichen Aufwand und große Stabilität aus.

Die Antriebslemente für das Mähwerk 2 und die Konditioniereinrichtung 3 sind folgendermaßen ausgebildet:

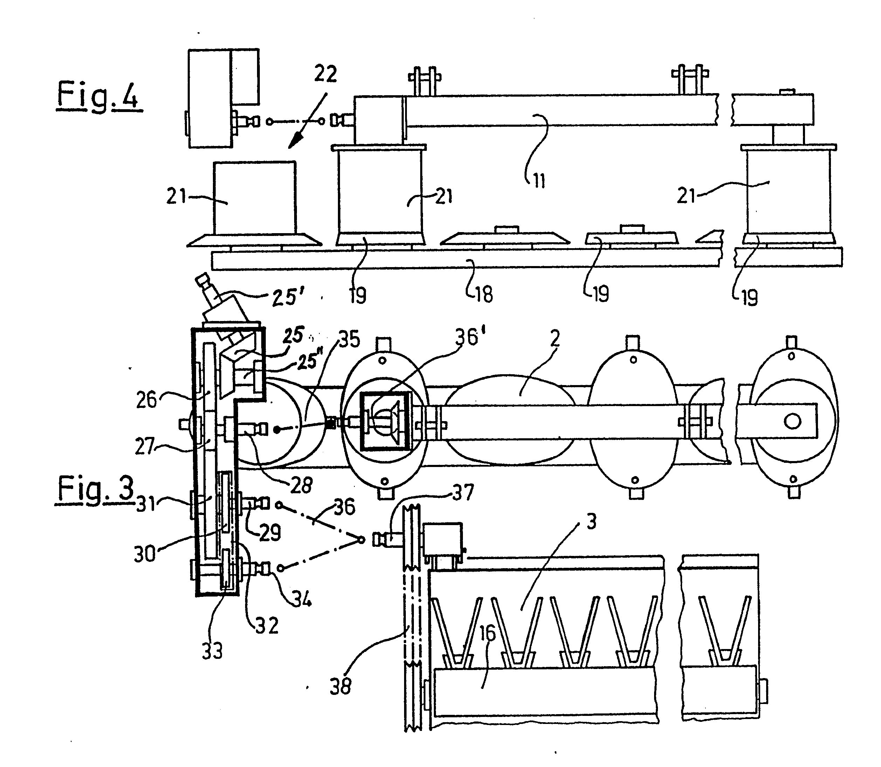

Insbesondere Fig. 5 zeigt, daß am Hauptrahmen 1 - wie bereits erwähnt - das Getriebe 14 angeflanscht ist. Die Verbindung kann über eine zusätzliche Lagerkonsole 23 erfolgen. Das Getriebe 14 (vergl. Fig. 3) verfügt über einen Eingangs-Kegelradtrieb 25, über den die Antriebswelle 15 (vergl. Fig. 1) mit einem ersten Stirnrad 26 in Antriebsverbindung steht. Der Kegelradtrieb 25 weist eine Eingangswelle 25' auf, die, um Ungleichförmigkeiten zu vermeiden, zur Gelenkwelle 15 gleichgerichtet verläuft. Das Stirnrad 26 ist auf einer Zwischenwelle 25" montiert und steht mit einem weiteren Stirnrad 27 in kämmender Verbindung. Das Stirnrad 27 ist drehfest auf einem Antriebswellenstummel 28 montiert. Auf einem weiteren Antriebswellenstummel 29 sind zwei Stirnräder 30 und 31 unverdrehbar gehaltert. Das Stirnrad 31 steht mit dem Stirnrad 27 in ständiger Antriebsverbindung.

Das Stirnrad 30 steht über einen Hülltrieb 32 (Ketten- bzw. Zahnriemen) mit einem zusätzlichen Stirnrad 33 in treibender Verbindung. Auch dieses Stirnrad 33 ist einem Antriebswellenstunmel 34 drehfest zugeordnet. Eine erste, längenveränderliche Gelenkwelle 35 verbindet den Antriebswellenstunmel 28 mit einer Eingangswelle 36' des Mähwerks 2.

Eine zweite, ebenfalls längenveränderliche Gelenkwelle 36 steht wahlweise entweder mit dem Antriebswellenstummel 29 oder dem Antriebswellenstummel 34 einerseits in treibender Verbindung. Anderenends ist die Gelenkwelle 36 mit einer Vorgelegewelle 37 verbunden, über die, zusammen mit einem Hülltrieb 38 (Ketten- oder Zahnriementrieb) der Antrieb der Rotorwelle 16 der Konditioniereinrichtung erfolgt. Durch die gegebene Umsteckmöglichkeit der Gelenkwelle 36 kann die Rotorwelle 16 mit unterschiedlichen Drehzahlen angetrieben werden. Steht die Gelenkwelle 36 zu diesem Zweck mit dem Antriebswellenstummel 34 in Verbindung, dreht die Rotorwelle 16 mit höchster Drehzahl. Wird die Gelenkwelle 36 mit dem Antriebswellenstummel 29 in Verbindung gebracht, erfolgt der Antrieb der Rotorwelle 16 mit niedrigerer Drehzahl. Auf diese Weise ist eine Beeinflussung der Aufbereitungswirkung der Rotorwelle 16 bzw. der Mitnehmer 17 gegeben. Wie vorstehend angedeutet, erfolgt der Antrieb der Mähscheiben 19 des Mähwerks 2 von der Eingangswelle 36' ausgehend. Der Antrieb der (bezogen auf Fig. 4, gesehen von links nach rechts) zweiten Mähscheibe 19 erfolgt über eine nicht näher dargestellte, vertikal stehende Welle. Der Antrieb der übrigen Mähscheiben 19 wird von unten, dh. von Antriebsmitteln, die im Mähwerksbalken 18 vorgesehen sind, vorgenommen.

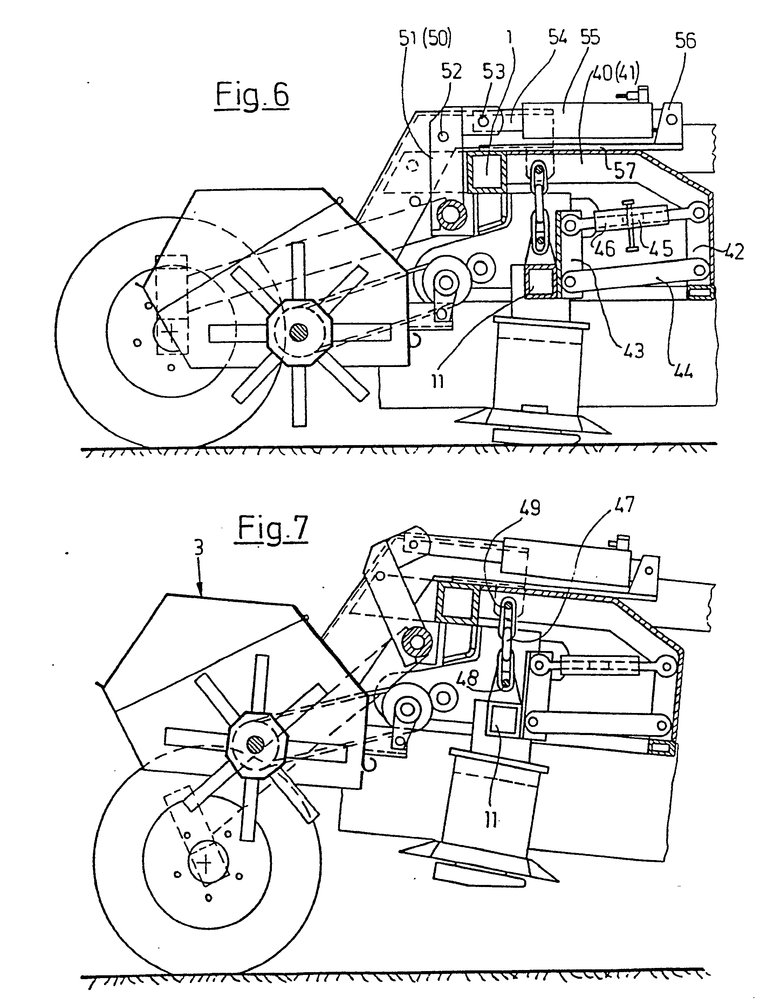

Nachfolgend wird anhand der Fig. 6 und 7 die Anlenkung des Mähwerks 2 in Bezug auf den Hauptrahmen 1 näher erläutert.

Am Hauptrahmen 1 sind - bezogen auf die Fahrtrichtung - zwei nach vorne ragende Ausleger 40 und 41 fest, z. B. durch Schweißen, angebracht. Die Lage der Ausleger 40 und 41 ist insbesondere der Fig. 1 zu entnehmen.

Insbesondere aus der Darstellung nach Fig. 6 geht hervor, daß die Ausleger 40 und 41 sich nach unten erstreckende Endteile 42 aufweisen. Jeweils einem Endteil 42 steht eine im wesentlichen vertikal gerichtete Strebe 43 gegenüber, die, wie ebenfalls aus Fig. 6 hervorgeht, am Mähwerksrahmen 11, z. B. ebenfalls durch Schweißen, befestigt ist. Jedes der Endteile 42 ist mit der gegenüberliegenden Strebe 43 des Mähwerks 2 über einen unteren Parallelogrammlenker 44 und einen oberen Parallelogrammlenker 45 verbunden. Die Länge der oben liegenden Parallelogrammlenker 45 ist jeweils durch eine verdrehbare Hülse 46 einstellbar, sodaß auf diese Weise die Schräglage des Mähwerks 2 in Bezug auf die Bodenoberfläche und damit in Grenzen auch die Schnitthöhe des Mähwerks verändert werden kann.

Um zu verhindern, daß das Mähwerk 2 beim Anheben in seine der Darstellung nach Fig. 7 entsprechenden Transportlage nach unten absinkt, sind zwischen den Auslegern 40 und 41 und dem Mähwerksrahmen 11 zwei Ketten 47 ein geschaltet. Die jeweils endseitigen Kettenglieder der Ketten 47 sind durch Steckbolzen 48 am Mähwerksrahmen 11 bzw. durch Steckbolzen 49 an den Auslegern 40 und 41 gesichert. Durch die vorstehend geschilderte Anlenkung des Mähwerks 2 ist sicher gestellt, daß dies den Bodenunebenheiten gut folgen kann, andererseits aber auch in eine angehobene Transportlage überführt werden kann.

Im Zusammenhang mit der Darstellung nach Fig. 1 wurde erwähnt, daß der Hilfsrahmen 4, der die Laufräder 9 und 10 trägt, gegenüber dem Hauptrahmen 1 schwenkbeweglich angeordnet ist. Etwa in der Mitte des Hilfsrahmens 4 befinden sich vertikal nach oben gerichtete, feststehende Laschen 50 und 51, die einen geringen seitlichen Abstand voneinander aufweisen. Die Laschen 50 und 51 sind in ihrem oberen Bereich mit Bolzen 52 und 53 miteinander verbunden (Fig. 6).

Der Bolzen 53 durchgreift eine Kolbenstange 54 eines einfachwirkenden Hydraulikzylinders 55. Das - bezogen auf die Fahrtrichtung - vordere Ende des Hydraulikzylinders 55 ist in einem Lagerbock 56 schwenkbeweglich gehalten. Der Lagerbock 56 ist fester Bestandteil einer unterhalb des Hydraulikzylinders 55 angeordneten Lagerplatte 57, die ihrerseits wiederum am Hauptrahmen 1 befestigt ist.

Bei Beaufschlagung des Hydraulikzylinders 55 wird, wie ohne weiteres ersichtlich, der Hilfsrahmen 4 entgegen dem Uhrzeigersinn verdreht. Die Laufräder 9 und 10 folgen dieser Bewegung, sodaß der Hauptrahmen 1, das an ihm angelenkte Mähwerk 2 und die Konditioniereinrichtung 3 in die in Fig. 7 wiedergegebene, angehobene Transportlage überführt wird. Das erneute Absenken in die Arbeitsstellung erfolgt durchden Einfluß des Eigengewichts der Landmaschine, sobald die Hydraulikflüssigkeit über die Anschlußleitung des Hydraulikzylinders 55 entweichen kann.

Die Anlenkung der Konditioniereinrichtung 3 in Bezug auf den Hauptrahmen 1 sowie die Möglichkeit, diese Einrichtung ebenfalls gegen unerwünschtes Absinken zu sichern, wird anhand der Fig. 1, 8 und 9 erläutert.

An der Konditioniereinrichtung 3 sind Tragarme 60 und 61 befestigt. Aus der Draufsicht nach Fig. 1 geht hervor, daß der Tragarm 60 mit dem Ausleger 40 und der Tragarm 61 mit dem Ausleger 41 - bezogen auf die Längsrichtung bzw. Fahrtrichtung der Maschine auf gemeinsamen Symmetrieachsen liegen. Die oben liegenden, abgewinkelten und sich demzufolge nach vorne erstreckenden Enden 62 der Tragarme 60 und 61 sind mit nach unten weisenden, offenen Fangtaschen 63 versehen. Die Fangtaschen 63 nehmen die Ausleger 40 und 41 zwischen sich auf, wobei die oberen Steckbolzen 49, die auch zur Sicherung der Ketten dienen, sowohl die Fangtaschen 63 als auch die Ausleger 40 und 41 durchgreifen. Im übrigen sind diese Verbindungen als lösbare Steckverbindungen ausgebildet, sodaß die Konditioniereinrichtung 3 relativ einfach von den Auslegern 40 und 41 gelöst werden kann.

Wie vorstehend beschrieben, ist die Verbindung der Konditioniereinrichtung 3 mit den Hauptrahmen 1 so getroffen, daß eine Relativbewegung der Konditioniereinrichtung 3 in Bezug auf den Hauptrahmen 1 möglich ist. Erläuternd sei aber erwähnt, daß sich die Konditioniereinrichtung 3 während des normalen Betriebes auf dem Hauptrahmen 1 in der Weise abstützt, daß die Enden 62 der Tragarme 60 und 61 auf der Oberseite des Hauptrahmens 1 anliegen. Wesentlich ist ferner, daß das Mähwerk vom Gewicht der Konditioniereinrichtung völlig entlastet ist.

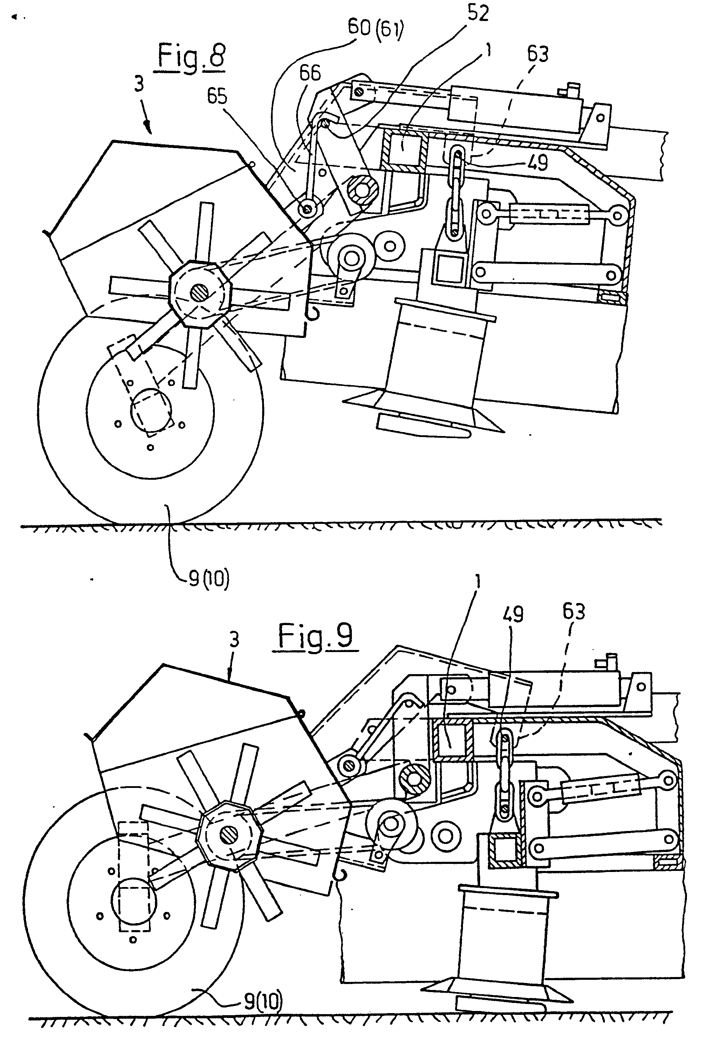

In der landwirtschaftlichen Praxis kommt es häufiger vor, daß Erntegut geerntet werden muß, ohne daß dieses gleichzeitig aufbereitet (konditioniert) werden soll. Um es den Landwirten in diesen Fällen zu ersparen, die Konditioniereinrichtung abbauen zu müssen, ist bei der vorgeschlagenen Landmaschine eine einfach zu handhabende Verriegelungseinrichtung vorgesehen, die sicherstellt, daß die Konditioniereinrichtung in ausgehobenem Zustand, d.h. in einer unwirksamen Stellung verbleibt, während das Mähwerk zum Ernten des Gutes auf die Bodenoberfläche abgesenkt werden kann. Diese mögliche Betriebsstellung ist in Fig. 9 wiedergegeben. In dieser Lage ist die Antriebsverbindung für die Konditioniereinrichtung gelöst.

Zur Erzielung des vorbeschriebenen Zwecks ist an der Konditioniereinrichtung 3 zwischen zwei Wangen 64 auf einem Lagerbolzen 65 ein Verriegelungshaken 66 schwenkbeweglich gelagert (Fig. 8). Die Länge des Verriegelungshakens 66 ist hierbei so bemessen, daß er den Bolzen 52 dann übergreifen kann, wenn der Hauptrahmen 1 der Landmaschine in seiner der Transportstellung entsprechenden Lage ausgehoben ist. Diese Position, bei der der Verriegelungshaken 66 den Bolzen 52 übergreift, ist in Fig. 8 wiedergegeben. Aus dieser Stellung kann das Mähwerk 2 durch Absenken des Hauptrahmens 1 in Kontakt zur Bodenoberfläche gebracht werden, wobei, wie aus Fig. 9 ersichtlich ist, die Konditioniereinrichtung 3 am Absenken gehindert wird. Es kann dann gemäht werden, ohne daß das Erntegut gleichzeitig konditioniert wird.

Bei der vorgeschlagenen Anordnung ist wesentlich, daß sämtliche Antriebselemente für das Mähwerk 2 und die Konditioniereinrichtung 3 am Hauptrahmen 1 und zwar innerhalb der wirksamen Mähwerksbreite, untergebracht sind. Dieser gewichtsmäßig hohe Anteil der Landmaschine wird über die Laufräder 9 und 10 abgestützt. Das Mähwerk 2 und die Konditioniereinrichtung 3 sind demzufolge von diesem Gewichtsanteil entlastet. Ferner ist das Mähwerk und die Konditioniereinrichtung getrennt am Hauptrahmen 1 befestigt. Dies bringt entscheidende Vorteile mit sich. Einmal kann das Mähwerk den Bodenunebenheiten leicht folgen und zum anderen kann die Konditioniereinrichtung auch dann an der Landmaschine verbleiben, wenn sie selbst nicht eingesetzt werden soll. Die getroffene Anordnung bringt ferner den großen Vorteil mit sich, daß auf aufwendige Entlastungseinrichtungen für das Mähwerk und/oder die Konditioniereinrichtung völlig verzichtet werden kann. Hierbei sei ergänzend darauf hingewiesen, daß notwendige Schutzeinrichtungen (Schutzbügel, -tücher od. dgl.) am Hauptrahmen 1 befestigt werden können, d.h., daß auch diese Einrichtungen das Gewicht des Mähwerks nicht beeinflussen. Schließlich kann die verwendete Konditioniereinrichtung, die beim dargestellten Ausführungsbeispiel mit etwa V-förmig gespreizten Mitnehmern bestückt ist, jederzeit gegen eine Konditioniereinrichtung anderer Bauart, so z.B. einer solchen, bei der Kunststoffbürsten Verwendung finden, ausgetauscht werden. Dies insbesondere auch deswegen, da in diesen Fällen nicht für jede Konditioniereinrichtung ein gesondertes Getriebe zum Antrieb mit unterschiedlichen Drehzahlen vorgesehen werden muß. Noch einfacher gestalten sich die Verhältnisse, wenn lediglich verschiedene Rotorwellen mit unterschiedlich gestalteten Konditionierwerkzeugen ausgetauscht werden, ansonsten die Konditiomiereinrichtung aber unverändert beibehalten wird.

## Patentansprüche

1. Fahrbare, von einem Schlepper od. dgl. gezogene Landmaschine mit einer verschwenk- und feststellbaren Zugvorrichtung (13) und einem über eine Hubvorrichtung (55, 54, 51, 50, 4, 7, 8, 9, 10) mit mindestens einem Hydraulikzylinder (55) und Laufrädern (9, 10) heb- und senkbaren Hauptrahmen (1), an dem ein Mähwerk (2) mit mehreren Mähscheiben (19) höhenbeweglich geführt ist, sowie einer dem Mähwerk (2) nachgeschalteten Konditioniereinrichtung (3), dadurch gekennzeichnet, daß die Konditioniereinrichtung (3) unabhängig vom Mähwerk (2) über Tragarme (60, 61) am Hauptrahmen (1) in der Weise befestigt ist, daß sie der Aushebebewegung des Hauptrahmens (1) folgt und daß an der Konditioniereinrichtung (3) ein Verriegelungshaken (66) schwenkbeweglich gehaltert ist, der in der oberen Endlage des Hauptrahmens (1) einen an der Hubvorrichtung (55, 54, 51, 50, 4, 7, 8, 9, 10) befindlichen Bolzen (52) übergreift.

2. Fahrbare Landmaschine nach Anspruch 1, dadurch gekennzeichnet, daß der Bolzen (52) zwischen zwei vertikal gerichteten Laschen (50, 51) befestigt ist, die Bestandteil eines am Hauptrahmen (1) mittels des Hydraulikzylinders (55) verschwenkbar gelagerten Hilfsrahmens (4), der die Laufräder (9, 10), trägt, sind.

3. Fahrbare Landmaschine nach den Ansprüchen 1 und 2, dadurch gekennzeichnet, daß die Tragarme (60, 61) der Konditioniereinrichtung (3) Enden (62) aufweisen, die - bezogen auf die Fahrtrichtung und in Seitenansicht der Landmaschine gesehen - nach vorne und parallel zur Bodenoberfläche gerichtet sind und nach unten offene Fangtaschen (63) aufweisen, die an Auslegern (40, 41) des Hauptrahmens (1) lösbar in der Weise befestigt sind, daß die Enden (62) auf der Oberseite des Hauptrahmens (1) aufliegen.

## Claims

1. Transportable agricultural machine to be towed by a tractor or the like, including a pivotable and securable towing means (13) and a main frame (1) which is raisable and lowerable via the intermediary of an elevating mechanism (55, 54, 51, 50, 4, 7, 8, 9, 10) having at least one hydraulic cylinder (55) and running wheels (9, 10), a mower (2) being provided with a plurality of mower discs (19) and being guided in an upwardly displaceable manner on said main frame, as well as a conditioning device (3) which is connected downstream of the mower (2), characterised in that the conditioning device (3) is mounted on the main frame (1) independently of the mower (2) via the intermediary of supporting arms (60, 61) in such a manner that it follows the lifting movement of the main frame (1), and in that an interlocking catch (66) is pivotally mounted on the conditioning device (3) and, in the upper end position of the main frame (1), enagages with a pin (52) disposed on the elevating mechanism (55, 54, 51, 50, 4, 7, 8, 9, 10).

2. Transportable agricultural machine according to claim 1, characterised in that the pin (52) is mounted between two vertically orientated lugs (50, 51) which form part of an auxiliary frame (4), which is pivotally mounted on the main frame (1) by means of the hydraulic cylinder (55) and supports the running wheels (9, 10).

3. Transportable agricultural machine according to claims 1 and 2, characterised in that the supporting arms (60, 61) of the conditioning device (3) have ends (62) which - when viewed with respect to the direction of travel and in a side elevational view of the agricultural machine - are orientated forwardly and parallel to the surface of the ground and have receiving cavities (63) which are open at their lower ends and are removably supportable on arms (40, 41) of the main frame (1) in such a manner that the ends (62) rest on the upper surface of the main frame (1).

## Revendications

1. Machine agricole roulante, tirée par un tracteur ou analogue, avec un dispositif de traction pivotant et immobilisable (13) et avec un châssis principal (1) levable et abaissable par l'intermédiaire d'un dispositif de relevage (55, 54, 51, 50, 4, 7, 8, 9, 10) à au moins un vérin à cylindre hydraulique (55) et à roues de roulement (9, 10), sur lequel un mécanisme faucheur (2) à plusieurs disques faucheurs (19) est guidé mobilement en hauteur ainsi qu'avec un dispositif conditionneur (3) monté après le mécanisme faucheur (2), caractérisée en ce que le dispositif conditionneur (3) est fixé de telle manière, indépendamment du mécanisme faucheur (2), par l'intermédiaire de bras porteurs (60, 61) au châssis principal (1) qu'elle suit le mouvement de levée du châssis principal (1) et en ce que sur le dispositif conditionneur (3) est supporté de façon mobilement pivotante un crochet de verrouillage (66) qui, dans la position extrême supérieure du châssis principal (1), accroche, par le dessus, un axe (52) se trouvant sur le dispositif de relevage (55, 54, 51, 50, 4, 7, 8, 9, 10).

2. Machine agricole roulante selon la revendication 1, caractérisée en ce que l'axe (52) est fixé entre deux barrettes (50, 51) dirigées verticalement, qui sont partie constitutive d'un châssis auxiliaire (4) monté de façon pivotante au moyen du vérin à cylindre hydraulique (55) sur le châssis principal (1) et qui porte les roues de roulement (9, 10).

3. Machine agricole roulante selon les revendications 1 et 2, caractérisée en ce que les bras porteurs (60, 61) du dispositif conditionneur (3) comportent des extrémités (62) qui - rapportées au sens de roulement et vues selon la vue latérale de la machine agricole - sont dirigées vers l'avant et parallèlement à la surface du sol et présentent des poches d'arrêt (63) ouvertes vers le bas, qui sont amoviblement fixées aux bras-consoles (40, 41) du châssis principal (1) de telle façon que les extrémités (62) s'appliquent sur la face supérieure du châssis principal (1).

## Fig. 2

## Fig. 1

Fig.4

22

21    21    11    21    21

25'    19    18    19    19

25    35    36'    2

25"

26

27

28    37    3

Fig.3    31    36    16

30    29    34

32

33    38

0 116 660

3

Fig.5

Fig.6

51 (50)   1   54  55   56

52  53   40(41)

57

46  45  42

43  44

11

Fig.7

3   49   47

48

11

Fig.8

Fig.9